# FASCICULE DE BREVET EUROPEEN

(11) **EP 1 207 609 B1**
(45) Date de publication et mention de la délivrance du brevet: **05.01.2011**
(21) Numéro de dépôt: 01402939.1
(22) Date de dépôt: 15.11.2001
(51) Int. Cl.: H02H 3/28

(54) **Procédé d'équilibrage statistique de mesures de transformateurs de courant pour une protection différentielle de jeu de barres**
Verfahren zum statistischen Äquilibrieren für Stromwandlermessungen eines Differentialschutzes für eine Sammelschienenanordnung
Method for statistically equilibrating current transformer measurements for a differential protection of a busbar system

(30) Priorité: 17.11.2000 FR 0014948
(43) Date de publication de la demande: 22.05.2002
(73) Titulaire: AREVA T&D SAS, 92084 Paris La Défense Cedex (FR)
(72) Inventeur: Carrillo, Jean-Jacques, 82000 Montauban (FR)
(74) Mandataire: Poulin, Gérard

(56) Documents cités:
- US-A- 5 367 425
- US-A- 5 835 325
- HOSEMANN G ET AL: "MODAL SATURATION DETECTOR FOR DIGITAL DIFFERENTIAL PROTECTION" IEEE TRANSACTIONS ON POWER DELIVERY,US,IEEE INC. NEW YORK, vol. 8, no. 3, 1 juillet 1993 (1993-07-01), pages 933-940, XP000403086 ISSN: 0885-8977

## Description

L'invention concerne un procédé de correction de mesures de transformateurs de courant disposés aux entrées et sorties d'un noeud de courant constitué par une zone et par une phase d'un jeu de barres, destiné à limiter le risque de déclenchement intempestif d'une protection différentielle affectée à un courant de phase de ce jeu de barres. Classiquement, une protection différentielle effectue lors de tests réguliers la somme vectorielle des courants d'une phase pour déterminer l'intensité du courant différentiel I_{d} entre les entrées et sorties de la zone protégée. Le courant différentiel est censé être nul en l'absence de défaut sur la zone, et est censé être significatif en cas de court-circuit générant un courant de défaut ou en cas de courant de fuite à la terre sur une barre transportant la phase. La détection de vrais courants de défauts (incluant les courants de fuite) est relativement fiable avec une protection différentielle affectée à une zone comprenant un nombre limité de départs et donc de transformateurs de courants, typiquement de l'ordre d'une dizaine de transformateurs. Par contre, lorsque le jeu de barres comprend un grand nombre N_{TC} de transformateurs de courants dans la zone protégée, une protection différentielle classique n'est pas à l'abri de déclenchements intempestifs résultant de l'absence de compensation statistique des erreurs de gain de chaque transformateur. Il convient de rappeler que la plupart des départs d'un poste sont mixtes et peuvent donc fournir ou consommer de l'énergie. La somme des courants entrant dans une zone est censée être égale à la somme des courants en sortant pour une phase donnée. Les transformateurs de courant présentent généralement une erreur dg positive ou négative sur leur gain, si bien que le courant mesuré (I)₀ est égal à I×(1±dg), I étant le courant vrai. En prenant l'hypothèse d'un cas extrême où tous les transformateurs d'entrée ont en moyenne une erreur de gain positive égale à dg₀ et où tous les transformateurs de sortie ont en moyenne une erreur de gain négative égale à -dg₀ , et en supposant pour simplifier qu'il y a autant de transformateurs d'entrée que de sortie et que chaque transformateur est parcouru par une même intensité I, on arrive à une situation où on mesure un courant différentiel erroné (I_{d})₀ égal à I×N_{TC}×dg₀, ce qui n'est pas acceptable lorsque le jeu de barres comprend un grand nombre N_{TC} de transformateurs. En effet, si dg₀ est de l'ordre de 1% et N_{TC} égal à une cinquantaine, on mesure alors un courant différentiel erroné (I_{d})₀ environ égal à la moitié du courant I traversant un transformateur. La protection différentielle ne peut distinguer ce courant erroné d'un vrai courant différentiel causé par un défaut sur le jeu de barre, et se déclenche donc même en l'absence de défaut.

Un procédé selon le préambule de la revendication 1 est connu des documents US-A-5835325 de US-A-5367425.

Afin de remédier à ces inconvénients, la demanderesse a développé un procédé d'équilibrage statistique de mesures de transformateurs de courant afin de corriger statistiquement les erreurs des transformateurs affectés à une protection différentielle de jeu de barre. Le caractère statistique de la correction implique que bien que les erreurs soient globalement corrigées, une correction individuelle sur la mesure initiale d'un transformateur peut aboutir à une valeur moins bonne que la mesure initiale, c'est à dire plus éloignée de la valeur vraie. Néanmoins, l'ensemble des corrections équilibre statistiquement l'erreur globale de l'ensemble des transformateurs, ce qui permet d'obtenir une mesure corrigée du courant différentiel pour laquelle ne subsiste qu'un faible pourcentage d'erreur, typiquement de l'ordre du pourcentage d'erreur sur le gain propre à un seul transformateur.

L'invention a donc pour objet un procédé de correction de mesures de transformateurs de courant selon la revendication 1.

Dans un mode préféré d'application du procédé selon l'invention, à chaque itération k et pour chaque vecteur courant itératif (Iₙ^{→})ₖ calculé qui converge vers le vecteur courant réel Iₙ^{→} depuis l'itération zéro utilisant la mesure des vecteurs courants (Iₙ^{→})₀, l'algorithme de convergence itérative détermine un vecteur correction partielle (εIₙ^{→})ₖ à ajouter audit vecteur courant itératif (Iₙ^{→})ₖ pour former le vecteur courant (Iₙ^{→})ₖ₊₁ de l'itération suivante k+1, ledit vecteur correction partielle (εIₙ^{→})ₖ étant colinéaire au vecteur courant différentiel erroné (I_{d}^{→})₀, de sens opposé et de norme égale au produit vectoriel normalisé entre chaque vecteur courant itératif (Iₙ^{→})ₖ et le vecteur courant différentiel erroné itératif (I_{d}^{→})ₖ pondéré par un coefficient λ affectant la vitesse de convergence de l'algorithme et compris entre zéro et un.

Dans un autre mode d'application du procédé selon l'invention, un nouveau test de l'ensemble des courants de la zone protégée est réalisé au cours d'une série de tests dès lors que deux vecteurs correction (εIₙ^{→})ₜ₁ et (εIₙ^{→})ₜ₂ calculés sur deux tests consécutifs du vecteur courant réel Iₙ^{→} d'un même transformateur de courant CTₙ correspondent à deux corrections de gain (dgₙ)ₜ₁ et (dgₙ)ₜ₂ qui présentent entre elles un écart en pourcentage supérieur à une valeur de référence r déterminée, et la méthode d'équilibrage statistique est mise en oeuvre pour un nombre N_{T} de tests statistiquement d'autant plus grand que le nombre N_{C} de courants dans la zone protégée est important.

Dans un autre mode d'application du procédé selon l'invention, un vecteur correction partielle (εIₙ^{→})ₖ obtenu lors d'une itération n'est pas pris en compte si son module est supérieur à un certain pourcentage déterminé du module du vecteur courant différentiel erroné (I_{d}^{→})₀, afin de pouvoir distinguer un courant différentiel causé par un défaut sur le jeu de barres du courant différentiel erroné (I_{d}^{→})₀.

Dans un autre mode d'application du procédé selon l'invention, les vecteurs correction εIₙ^{→} obtenus pour l'ensemble des vecteurs courant (Iₙ^{→})₀ mesurés lors d'un test sont exploités pour fournir pour chaque transformateur de courant CTₙ une matrice de correction instantanée de gain et une matrice de correction instantanée de déphasage à appliquer respectivement sur le gain et le déphasage introduits par le transformateur. Une matrice de correction stabilisée de gain ou de déphasage peut alors être réalisée pour chaque transformateur de courant CTₙ à la fin d'une série de tests, qui correspond à la convergence des matrices de correction instantanées de ce transformateur de courant obtenues au cours des tests de la série.

Dans un autre mode d'application du procédé selon l'invention, des données tabulées et fonctions des différentes configurations de nombre N_{C} de courants et de nombre N_{T} de tests possibles permettent de fournir une indication de la qualité de convergence en module et en phase de la correction statistique à appliquer au vecteur courant différentiel mesuré, ladite correction statistique étant calculée suite à un nombre N_{T} déterminé de tests et convergeant vers la correction statistique optimale qui est obtenue suite à un nombre N_{T} de tests d'autant plus grand que le nombre N_{C} de courants est important.

L'invention, ses caractéristiques et ses avantages sont précisés dans la description qui suit en rapport avec les figures ci dessous.
La Figure 1 représente schématiquement une zone d'un jeu de barres triphasé constituant pour chaque phase un noeud de courant.
La Figure la illustre pour une phase donnée l'application de la loi des noeuds sur la zone de la figure 1.
La figure 2 représente schématiquement une application du procédé d'équilibrage statistique aux mesures fournies par des transformateurs de courant.
La Figure 3 illustre pour une phase donnée la relation vectorielle de la loi des noeuds pour les mesures fournies par des transformateurs de courant parfaits.
La Figure 4 illustre pour une phase donnée le principe de correction de mesures de vecteurs courants par convergence itérative.
La figure 5 est un graphe représente des calculs par simulation de la qualité de convergence de la correction statistique à appliquer au module du vecteur courant différentiel mesuré.

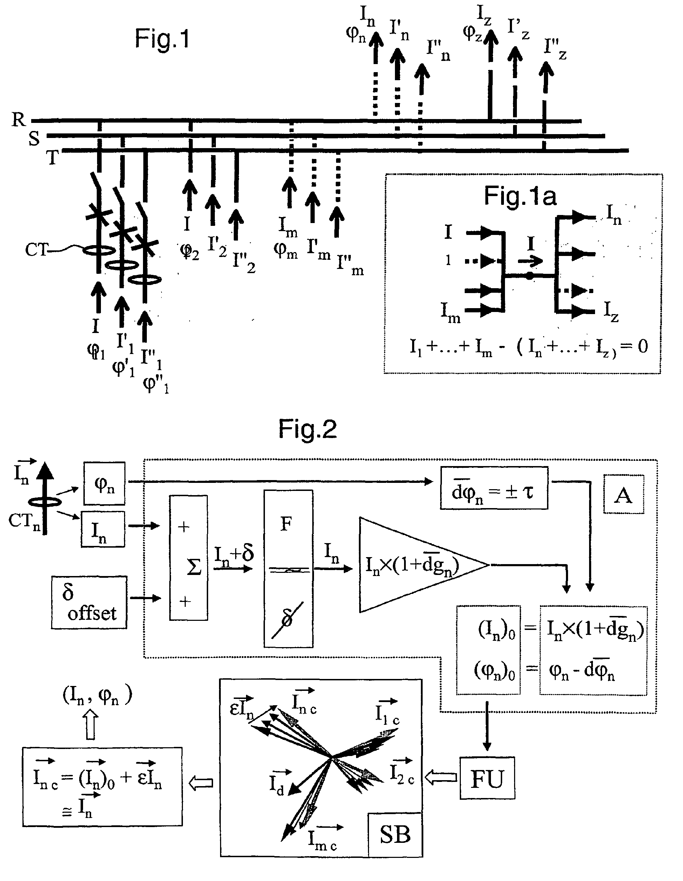

En Figure 1 est représentée schématiquement une zone d'un jeu de barres triphasé (R,S,T) comportant des départs pouvant fournir ou consommer de l'énergie. Chaque départ est équipé d'au moins un transformateur de courant (CT) par phase, de sorte que chaque courant rentrant ou sortant du noeud constitué par une phase de la zone peut être mesuré. Dans l'exemple de la figure, le jeu de barres comprend un nombre total z de départs dont un nombre m de départs rentrants. Pour une phase donnée, par exemple la phase R, chaque courant Iₙ mesuré sur un départ est entaché d'un certain déphasage (ϕₙ) propre au transformateur de courant et résultant notamment des caractéristiques du secondaire du transformateur et des appareillages qui peuvent y être connectés.

La Figure la illustre pour une phase donnée l'application de la loi des noeuds aux courants rentrant et sortant d'un jeu de barres, en l'absence de défaut. En valeur normalisée, le courant I transitant par le jeu de barres est égal à la somme des courants rentrants ainsi qu'à la somme des courants sortants, d'où la relation suivante: I₁ +...+ Iₘ - (Iₙ +...+ I_{z)} = 0.

La figure 2 représente schématiquement une application du procédé d'équilibrage statistique aux mesures I₁^{→}, I₂^{→}, Iₘ^{→}, Iₙ^{→} des vecteurs courants d'une même phase d'une zone d'un jeu de barres. La mesure de chaque vecteur courant réel alternatif Iₙ^{→} par un transformateur de courant CTₙ consiste d'abord à extraire le déphasage ϕₙ et le module Iₙ du vecteur. La mesure du module en courant alternatif est généralement entachée d'une petite composante continue ou offset δ. Une unité d'amplification A filtre cette composante continue pour amplifier uniquement le courant alternatif. Toutefois, l'amplificateur d'un transformateur de courant CTₙ n'est généralement pas parfait, et présente une erreur algébrique dgₙ positive ou négative sur leur gain. L'erreur algébrique sur le courant mesuré (Iₙ)₀ est alors égale au courant vrai Iₙ multiplié par l'erreur algébrique sur le gain dgₙ . En outre, l'amplificateur introduit aussi une erreur de déphasage dϕₙ consistant en un temps τ d'avance ou de retard sur le déphasage en entrée. Ainsi, les valeurs de sortie (Iₙ)₀ et (ϕₙ)₀ présentent chacune un écart plus ou moins important avec les valeurs vraies en entrée. Pour une même phase de courant, les valeurs erronées (Iₙ)0 et (ϕₙ)₀ de chaque transformateur de courant CTₙ sont récupérées par une ou plusieurs unités d'acquisition et de traitement FU, comportant chacune un module SB chargé de la mise en oeuvre du procédé de correction des mesures par équilibrage statistique selon l'invention. Le procédé détermine pour chaque vecteur courant mesuré (Iₙ^{→})₀ le vecteur correction εIₙ^{→} à lui ajouter pour obtenir un vecteur courant corrigé Iₙ^{→}c sensiblement égal au vecteur courant réel Iₙ^{→}. Il est à noter que le vecteur courant corrigé Iₙ^{→}_{c} est statistiquement beaucoup plus proche de Iₙ^{→} que ne l'est le vecteur courant mesuré (Iₙ^{→})₀, mais qu'il n'est pas impossible d'avoir la comparaison inverse pour quelques transformateur de courants parmi l'ensemble.

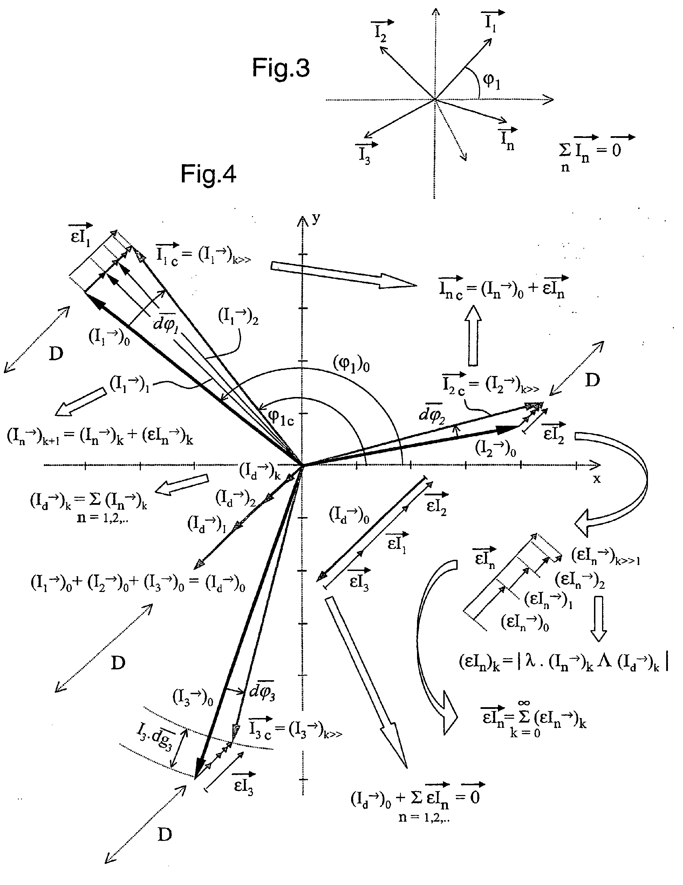

En Figure 3 est illustrée pour une phase donnée la relation vectorielle de la loi des noeuds pour les mesures fournies par des transformateurs de courant parfaits. De par le déphasage (ϕₙ) affectant chaque courant Iₙ mesuré, on a la somme vectorielle ΣIₙ^{→} des courants égale au vecteur nul.

En Figure 4 est illustré pour une phase donnée le principe de correction de mesures de vecteurs courants (Iₙ^{→})₀ par convergence itérative suite à un test de mesures, dans un mode d'application préféré du procédé selon l'invention dans lequel l'algorithme de convergence effectue des corrections itératives à base de produits vectoriels. Dans un souci de simplification de la représentation, la figure illustre un exemple où seuls trois courants I₁, I₂ et I₃ transitent par une même phase d'une zone de jeu de barres, mais il faut comprendre que le procédé présente surtout un intérêt lorsque le nombre de courants approche ou dépasse une dizaine. Le courant différentiel erroné (I_{d}^{→})₀ est obtenu en sommant les vecteurs courant mesurés (I₁^{→})₀, (I₂^{→})₀ et (I₃^{→})₀. Sur la figure, on a représenté des vecteurs courant mesurés exagérément différents en module de façon que leur somme aboutisse à un vecteur (I_{d}^{→})₀ assez grand. En réalité, ce n'est qu'à partir d'un nombre de courants plus grand qu'on risque d'avoir un courant différentiel erroné aussi fort lors d'un test de mesures.

Le principe de correction de mesures consiste à la base à déterminer pour chaque vecteur courant mesuré (Iₙ^{→})₀ le vecteur correction εIₙ^{→} à apporter pour obtenir un vecteur courant corrigé Iₙ^{→}_{c} aussi proche que possible du vecteur courant réel Iₙ^{→}. Les vecteur courant réel Iₙ^{→} ne sont bien sûr pas connus, mais on sait qu'en l'absence de défaut leur somme doit être nulle. On a donc les relations suivantes:
Σ(Iₙ^{→})₀ = (I_{d}^{→})₀ |
Iₙ^{→}_{c} = (Iₙ^{→})₀ + εIₙ^{→} | d'où ΣIₙ^{→}c = (I_{d}^{→})0 + Σ_{ε}Iₙ^{→}
   Comme ΣIₙ^{→}c ≅ 0 = ΣIₙ^{→}, on a donc ΣεIₙ^{→} + (I_{d}^{→})₀ = 0

On choisit d'orienter chaque vecteur correction εIₙ^{→} de façon colinéaire au vecteur courant différentiel erroné (I_{d}^{→})₀ , et en sens opposé pour vérifier la relation vectorielle précédente. On a alors en norme la relation ΣεIₙ = (I_{d})₀ . Il reste à déterminer en norme chaque correction εIₙ. L'algorithme développé consiste en une suite de vecteurs correction partielle (εIₙ^{→})ₖ dont la somme Σₖ(εIₙ^{→})ₖ converge vers la correction εIₙ^{→}. Si la convergence s'effectue sans oscillation, ce qui est le cas dans l'exemple illustré à la figure 4, la relation est aussi valable en norme et peut s'écrire: Σₖ(εIₙ)ₖ → εIₙ.

Chaque vecteur correction partielle (εIₙ)ₖ est égal au produit vectoriel normalisé entre chaque vecteur courant itératif (Iₙ^{→})ₖ et le vecteur courant différentiel erroné itératif (I_{d}^{→})ₖ pondéré par un coefficient λ affectant la vitesse de convergence de l'algorithme et compris entre zéro et un. La relation mathématique s'écrit:
(εIₙ)ₖ = | λ . (Iₙ^{→})ₖ A (I_{d}^{→})ₖ |, le calcul commençant à l'itération k = 0.

Il existe lors de chaque test de mesures une valeur de coefficient idéal λ_{c} qui permettrait de converger en une seule fois vers la correction εIₙ, et donc telle que: εIₙ = |λ_{c} . (Iₙ^{→})₀ Λ (I_{d}^{→} )₀| = λ_{c} × (Iₙ)₀ × (I_{d})₀ × sin [(Iₙ^{→})₀, (I_{d}^{→})₀]

On peut remarquer que la correction εIₙ est proportionnelle au module du vecteur courant mesuré (Iₙ^{→})₀ auquel elle s'applique. Ce résultat est logique puisque l'erreur exacte sur le courant mesuré (Iₙ)₀ est égale à Iₙ × dg ₙ , soit quasiment (Iₙ) ₀ × dg ₙ. De même, on peut vérifier que la correction εIₙ est bien proportionnelle au module du vecteur courant différentiel erroné (I_{d}^{→})₀.

La valeur de λ_{c} étant indéterminée, il est donc nécessaire de procéder par itération pour aboutir à la convergence, avec un coefficient λ arbitraire. La convergence est d'autant plus rapide que le coefficient λ se trouve proche du coefficient idéal λ_{c}.

En passant d'une itération k à une itération k+1, le calcul d'un vecteur courant itératif (Iₙ^{→})ₖ₊₁ et d'un vecteur courant différentiel erroné itératif (I_{d}^{→})ₖ₊₁ s'effectue de la façon suivante: (Iₙ^{→})ₖ₊₁ = (Iₙ^{→})ₖ + (εIₙ^{→})ₖ
et (I_{d}^{→})ₖ₊₁= Σₙ (Iₙ^{→})ₖ₊₁ = (I_{d}^{→})ₖ + Σₙ (εIₙ^{→})ₖ

Ainsi, entre deux itérations k et k+1, le vecteur courant différentiel erroné itératif (I_{d}^{→})ₖ diminue en norme d'une valeur égale à Σₙ (εIₙ^{→})ₖ. Suivant le coefficient λ choisi, la norme du vecteur (I_{d}^{→})ₖ ainsi que celle de chaque vecteur (εIₙ^{→})ₖ vont converger plus ou moins vite vers 0 à chaque nouvelle itération k.

L'algorithme de convergence est ainsi appliqué à chaque vecteur courant mesuré (Iₙ^{→})₀ lors d'un test pour obtenir l'ensemble des vecteurs corrections εIₙ^{→} à appliquer à l'ensemble des mesures effectuées par les transformateurs de courant CTₙ.

Pendant un test de mesures, il faut pouvoir distinguer un courant différentiel causé par un défaut sur le jeu de barres du courant différentiel erroné (I_{d}^{→})₀ mesuré. En effet, il ne faut pas qu'une mesure d'un courant différentiel soit interprétée comme résultant des erreurs de gains des CTₙ si cette mesure résulte d'un vrai courant de défaut existant lors de la mesure. Une façon d'écarter autant que possible de la correction une telle éventualité consiste à prévoir qu'un vecteur correction partielle (εIₙ^{→})ₖ obtenu lors d'une itération ne soit pas pris en compte si son module est supérieur à un certain pourcentage déterminé du module du vecteur courant différentiel erroné (Id^{→})₀. Dans l'exemple de la figure 4, le vecteur correction partielle (εI₁^{→})₁, permettant de passer du vecteur courant mesuré (I₁^{→})₀ au vecteur courant itératif (I₁^{→})₁ , représente en norme presque 20% du module du vecteur courant différentiel erroné (I_{d}^{→})₀. Dans cette illustration, les erreurs de gain sont exagérées car un tel pourcentage supérieur à 10% signifie en réalité qu'on a affaire à un vrai courant de défaut. Le seuil de discrimination est généralement choisi entre 1% et 10% du module du vecteur courant différentiel erroné (I_{d}^{→})₀.

Pour chaque test, les vecteurs corrections εIₙ^{→} peuvent être exploités pour fournir pour chaque transformateur de courant (CTₙ) une matrice de correction instantanée de gain et une matrice de correction instantanée de déphasage à appliquer respectivement sur le gain et le déphasage introduits par le transformateur. Le qualificatif instantané attribué à la correction est employé dans le sens d'une période de temps relativement courte par rapport à la durée entre deux tests consécutifs. Il faut comprendre qu'un test de mesure de vecteurs courant (Iₙ^{→})₀ fournit généralement des mesures qui sont chacune déjà moyennées sur une courte période, par exemple de l'ordre d'une dizaine de secondes. La durée moyenne entre deux tests est quant à elle généralement bien plus importante, afin de tenir compte des changements statistiques pouvant intervenir sur l'ensemble des courants au cours du temps. Plus le nombre de courants est important, plus le risque est important de voir la configuration des courants modifiée et plus il est nécessaire de faire une série d'un grand nombre de tests pour refléter une configuration de courant stable. Afin de ne pas arrêter une série de tests alors qu'un courant ne serait pas stabilisé, un nouveau test de l'ensemble des courants de la zone protégée est réalisé dès lors que pour au moins un transformateur de courant CTₙ deux vecteurs correction (εIₙ^{→})ₜ₁ et (εIₙ^{→})ₜ₂ calculés sur deux tests consécutifs correspondent à deux corrections de gain (dgₙ)ₜ₁ et (dgₙ)ₜ₂ qui présentent entre elles un écart en pourcentage supérieur en valeur absolue à une valeur de référence r déterminée. Par exemple, si on mesure pour un CTₙ lors d'un test à un instant t₁ une correction de gain (dgₙ)ₜ₁ égale à 1%, et une correction de gain (dgₙ)ₜ₂ égale à 0,8% à un instant t₂ correspondant au test suivant, l'écart en pourcentage est dans ce cas égal à 20%, ce qui conduit à réaliser un nouveau test si la valeur de référence r est fixée inférieure à 20%. Une série de tests peut ainsi durer jusqu'à ce qu'il ne reste aucun transformateur de courant pour lequel ledit écart en pourcentage dépasse la valeur de référence fixée, c'est à dire jusqu'à ce qu'on n'observe plus de variation significative d'intensité des courants.

A la fin d'une série d'un nombre N_{T} de tests suffisant pour observer des courants stabilisés, une matrice de correction stabilisée de gain ou de déphasage peut être réalisée pour chaque transformateur de courant CTₙ , et correspond à la convergence des matrices de correction de ce transformateur de courant obtenues au cours de chaque test de la série, afin que lesdites matrices de correction stabilisée reflètent une configuration de courant stable

Les caractéristiques des transformateurs de courant équipant une protection différentielle de jeu de barres ne sont généralement pas parfaitement stable sur une longue période de l'ordre d'un semestre ou d'une année. Tout d'abord, un CTₙ peut devenir défaillant et devoir être remplacé, ce qui implique un changement d'erreur sur le gain du nouveau transformateur. D'autre part, le gain d'un CTₙ varie généralement avec le vieillissement ou les conditions climatiques. Il est donc nécessaire de refaire régulièrement des séries de tests au cours d'une année afin de recalculer les matrices de correction stabilisée de gain ou de déphasage correspondant aux changements intervenus dans les caractéristiques des transformateurs.

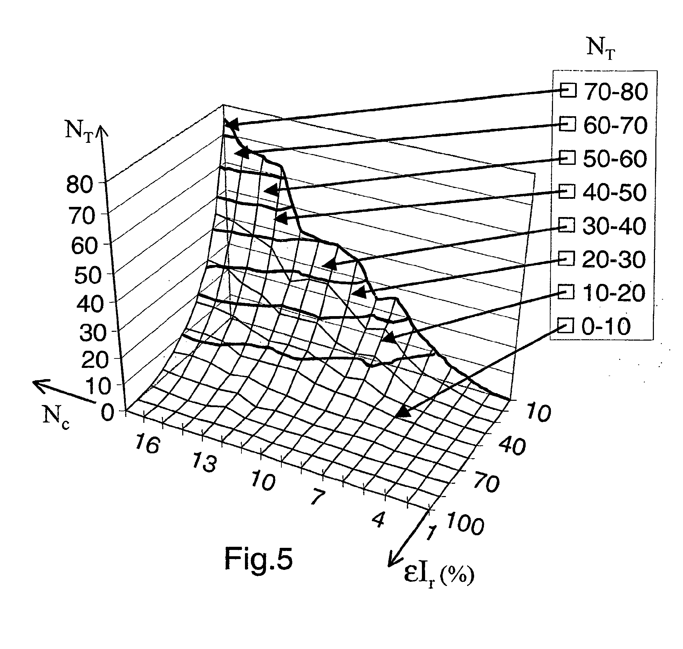

La figure 5 est un graphe qui représente des calculs par simulation de la qualité de convergence de la correction statistique à appliquer au module du vecteur courant différentiel mesuré pour une configuration de protection différentielle mesurant un nombre de courants N_{C}. La grandeur εIᵣ représente le pourcentage d'erreur relative entre la ladite correction statistique calculée suite à un nombre N_{T} déterminé de tests et la correction statistique optimale correspondant à une série d'un nombre de tests suffisamment grand pour qu'on n'observe plus de variation significative d'intensité des courants à la fin de la série. Une correction statistique présente qualité de convergence d'autant meilleure qu'elle correspond à un εIᵣ faible. On voit par exemple que pour un nombre de courants égal à six ou sept, il faut réalise de dix à vingt tests pour que le pourcentage d'erreur relative εIᵣ reste limité à 10%. On peut donc dire qu'une correction statistique calculée sur dix à vingt tests présente une bonne qualité de convergence vers la correction statistique optimale correspondant à un grand nombre de tests et pour laquelle par définition εIᵣ est voisin de zéro. On peut vérifier que plus le nombre de courants est important, plus il faut effectuer de tests pour que la correction statistique après N_{T} tests soit proche de la correction statistique optimale. Un graphe du même type peut être calculé pour représenter la qualité de convergence εϕᵣ de la correction statistique à appliquer à la phase du vecteur courant différentiel mesuré. Les données de ces graphes peuvent être tabulées pour permettre de connaître les erreurs relatives qui subsistent sur les corrections statistiques en module et en phase, dans le cas où une série de test doit être limitée à un nombre N_{T} trop faible pour obtenir une correction statistique optimale.

## Revendications

1. Procédé de correction de mesures de transformateurs de courant (CTₙ) disposés aux entrées et sorties d'un noeud de courant constitué par une phase d'une zone d'un jeu de barres, destiné à limiter le risque de déclenchement intempestif d'une protection différentielle de courant de phase, ladite protection différentielle effectuant la somme vectorielle des vecteurs courant mesurés ((Iₙ^{→})₀) pour déterminer l'intensité d'un courant différentiel (I_{d}) entre les entrées et sorties de ladite zone lors de tests réguliers et appliquant une correction aux vecteurs courant mesurés, **caractérisé en ce qu'**il est basé sur une méthode d'équilibrage statistique utilisant les vecteurs courant mesurés ((Iₙ^{→})₀) obtenus chacun à partir d'une mesure de l'intensité (Iₙ) et du déphasage (ϕₙ) du vecteur courant réel (Iₙ^{→}) fournie lors de chaque test en l'absence de défaut par un transformateur de courant (CTₙ), et **en ce qu'**il met en oeuvre lors d'au moins un test un algorithme de convergence itérative permettant de déterminer à partir du vecteur courant différentiel erroné ((I_{d}^{→})₀) formé par la somme (Σ(Iₙ^{→})₀) des vecteurs courant mesurés un vecteur correction (εIₙ^{→}), qui est colinéaire au vecteur courant différentiel erroné et de sens opposé, et apporter ce vecteur correction, à chaque vecteur courant mesuré ((Iₙ^{→})₀) pour obtenir un vecteur courant corrigé (Iₙ^{→}_{c}) sensiblement égal au vecteur courant réel (Iₙ^{→}), afin de corriger statistiquement ledit vecteur courant différentiel erroné ((I_{d}^{→})₀).

2. Procédé de correction de mesures selon la revendication 1, **caractérisé en ce qu'**à chaque itération (k) et pour chaque vecteur courant itératif ((In^{→})ₖ) calculé qui converge vers le vecteur courant réel (Iₙ^{→}) depuis l'itération zéro utilisant la mesure des vecteurs courants ((Iₙ^{→})₀), l'algorithme de convergence itérative détermine un vecteur correction partielle ((εIₙ^{→})ₖ) à ajouter audit vecteur courant itératif ((Iₙ^{→})ₖ) pour former le vecteur courant ((Iₙ^{→})ₖ₊₁) de l'itération suivante (k+1), ledit vecteur correction partielle ((εIₙ^{→})ₖ) étant colinéaire au vecteur courant différentiel erroné ((I_{d}^{→})₀), de sens opposé et de norme égale au produit vectoriel normalisé entre chaque vecteur courant itératif ((Iₙ^{→})ₖ) et le vecteur courant différentiel erroné itératif ((I_{d}^{→})ₖ) pondéré par un coefficient λ affectant la vitesse de convergence de l'algorithme et compris entre zéro et un.

3. Procédé de correction de mesures selon l'une des revendications 1 et 2, **caractérisé en ce qu'**un nouveau test de l'ensemble des courants de la zone protégée est réalisé au cours d'une série de tests dès lors que deux vecteurs correction ((εIₙ^{→})ₜ₁ , (εIₙ^{→})ₜ₂) calculés sur deux tests consécutifs du vecteur courant réel (Iₙ^{→}) d'un même transformateur de courant (CTₙ) correspondent à deux corrections de gain ((dgₙ)ₜ₁ , (dgₙ)ₜ₂) qui présentent entre elles un écart en pourcentage supérieur à une valeur de référence (r) déterminée, et **en ce que** la méthode d'équilibrage statistique est mise en oeuvre pour un nombre (N_{T}) de tests statistiquement d'autant plus grand que le nombre (N_{C}) de courants dans la zone protégée est important.

4. Procédé de correction de mesures selon la revendication 3, **caractérisé en ce que** la valeur de référence (r) est fixée inférieure à 20%.

5. Procédé de correction de mesures selon l'une des revendications 1 à 4, **caractérisé en ce qu'**un vecteur correction partielle ((εIₙ^{→})ₖ) obtenu lors d'une itération n'est pas pris en compte si son module est supérieur à un certain pourcentage déterminé du module du vecteur courant différentiel erroné ((I_{d}^{→})₀), afin de pouvoir distinguer un courant différentiel causé par un défaut sur le jeu de barres du courant différentiel erroné ((I_{d}^{→})₀).

6. Procédé de correction de mesures selon l'une des revendications 1 à 5, **caractérisé en ce que** les vecteurs correction (εIₙ^{→}) obtenus pour l'ensemble des vecteurs courant ((Iₙ^{→})₀) mesurés lors d'un test sont exploités pour fournir pour chaque transformateur de courant (CTₙ) une matrice de correction instantanée de gain et une matrice de correction instantanée de déphasage à appliquer respectivement sur le gain et le déphasage introduits par le transformateur.

7. Procédé de correction de mesures selon la revendication 6, **caractérisé en ce qu'**une matrice de correction stabilisée de gain ou de déphasage est réalisée pour chaque transformateur de courant (CTₙ) à la fin d'une série de tests et correspond à la convergence des matrices de correction de ce transformateur de courant obtenues au cours des tests de la série, afin que lesdites matrices de correction stabilisée reflètent une configuration de courant stable.

8. Procédé de correction de mesures selon l'une des revendications 1 à 7, **caractérisé en ce que** des données tabulées et fonctions des différentes configurations de nombre (N_{C}) de courants et de nombre (N_{T}) de tests possibles permettent de fournir une indication (εIᵣ,εϕᵣ) de la qualité de convergence en module et en phase de la correction statistique à appliquer au vecteur courant différentiel mesuré, ladite correction statistique étant calculée suite à un nombre (N_{T}) déterminé de tests et convergeant vers la correction statistique optimale.

## Claims

1. Method for correcting measurements from current transformers (CTₙ) disposed at the inputs and outputs of a current node consisting of a phase of a region of a bar system, intended to limit the risk of untimely triggering of a differential phase current protection system, said differential protection system taking the vector sum of the measured current vectors ((Iₙ^{→})₀) to determine the strength of a differential current (I_{d}) between the inputs and outputs of said region in the course of regular tests and applying a correction to the measured current vectors, **characterised in that** it is based on a statistical balancing method using the measured current vectors ((Iₙ^{→})₀) which are each obtained from a measurement, supplied at the time of each test in the absence of a fault by a current transformer (CTₙ), of the current (Iₙ) and phase difference (ϕₙ) of the actual current vector (Iₙ^{→}), and **in that** it uses at the time of at least one test an iterative convergence algorithm for determining, from the erroneous differential current vector ((I_{d}^{→})₀) formed by the sum (Σ(Iₙ^{→})₀) of the measured current vectors, a correction vector (εIₙ^{→}) which is collinear with the erroneous differential current vector and goes in the opposite direction, and applying this correction vector to each measured current vector ((Iₙ^{→})₀) to obtain a corrected current vector (Iₙ^{→}_{c}) which is substantially equal to the actual current vector (Iₙ^{→}) so as to correct statistically said erroneous differential current vector ((I_{d}^{→})₀).

2. Method for correcting measurements according to claim 1, **characterised in that**, at each iteration (k) and for each calculated iterative current vector ((Iₙ^{→})ₖ) which converges towards the actual current vector (Iₙ^{→}) from iteration zero using the measurement of the current vectors ((Iₙ^{→})₀), the iterative convergence algorithm determines a partial correction vector ((εIₙ^{→})ₖ) to be added to said iterative current vector ((Iₙ^{→})ₖ) to form the current vector ((Iₙ^{→})ₖ₊₁) of the next iteration (k+1), said partial correction vector ((εIₙ^{→})ₖ) being collinear with the erroneous differential current vector and going in the opposite direction, and having a norm equal to the normalised vector product of each iterative current vector ((Iₙ^{→})ₖ) with the iterative erroneous differential current vector ((I_{d}^{→})ₖ), weighted by a coefficient λ which affects the rate of convergence of the algorithm and is between zero and one.

3. Method for correcting measurements according to either claim 1 or claim 2, **characterised in that** a further test of the set of currents of the protected region is carried out in a series of tests once two correction vectors ((εIₙ^{→})ₜ₁), ((εIₙ^{→})ₜ₂), calculated over two consecutive tests of the actual current vector (Iₙ^{→}) of the same current transformer (CTₙ), correspond to two gain corrections ((dgₙ)ₜ₁, (dgₙ)ₜ₂) having a percentage difference between them which is greater than a determined reference value (r), and **in that** the statistical balancing method is carried out for a statistically greater number (N_{T}) of tests the greater the number (N_{C}) of currents in the protected region.

4. Method for correcting measurements according to claim 3, **characterised in that** the reference value (r) is set below 20%.

5. Method for correcting measurements according to any one of claims 1 to 4, **characterised in that** a partial correction vector ((εIₙ^{→})ₖ) obtained in an iteration is not taken into account if the modulus thereof is greater than a particular determined percentage of the modulus of the erroneous differential current vector ((I_{d}^{→})₀), in such a way that it is possible to distinguish a differential current caused by a fault in the set of bars from the erroneous differential current ((I_{d}^{→})₀).

6. Method for correcting measurements according to any one of claims 1 to 5, **characterised in that** the correction vectors (εIₙ^{→}) obtained for the set of current vectors ((Iₙ^{→})₀) measured in a test are used to provide for each current transformer (CTₙ) an instantaneous gain correction matrix and an instantaneous phase difference correction matrix to be applied respectively to the gain and the phase difference introduced by the transformer.

7. Method for correcting measurements according to claim 6, **characterised in that** a stabilised gain or phase difference correction matrix is produced for each current transformer (CTₙ) at the end of a series of tests and corresponds to the convergence of the correction matrices of this current transformer which are obtained during the tests of the series, in such a way that said stabilised correction matrices reflect a stable current configuration.

8. Method for correcting measurements according to any one of clams 1 to 7, **characterised in that** tabulated data, which are a function of the various possible configurations of the number (N_{C}) of currents and number (N_{T}) of tests, make it possible to provide an indication (εIᵣ, εϕᵣ) of the quality of convergence in modulus and in phase of the statistical correction to be applied to the measured differential current vector, said statistical correction being calculated after a determined number (N_{T}) of tests and converging towards the optimum statistical correction.

## Patentansprüche

1. Messkorrekturverfahren für Stromwandler (CTₙ), die an den Ein- und Ausgängen eines Stromknotens angeordnet sind, der aus einer Phase in einer Zone eines Sammelschienensystems besteht, dazu bestimmt, das Risiko der ungewollten Auslösung eines Phasenstrom-Differentialschutzes zu begrenzen, wobei dieser Differentialschutz die vektorielle Summe der gemessenen Stromvektoren ((Iₙ^{→})ₒ) bildet, um bei regelmäßige Tests die Stärke eines Differentialstroms (I_{d}) zwischen den Ein- und Ausgängen zu bestimmen, und eine Korrektur auf die gemessenen Stromvektoren anwendet, **dadurch gekennzeichnet, dass** es auf einem statistischen Ausgleichsverfahren basiert, das die gemessenen Stromvektoren ((Iₙ^{→})₀) verwendet, die jeweils durch eine Messung der Stärke (Iₙ) und der Phasenverschiebung (ϕₙ) des realen Stromvektors (Iₙ^{→}) erhalten wurden, die bei jedem Test in Anwesenheit eines Fehlers von einem Stromwandler (CTₙ) erzeugt wurde, und **dadurch**, dass es bei mindestens einem Test einen iterativen Konvergenzalgorithmus ausführt, der es erlaubt, anhand des falschen Differentialstromvektors ((I_{d}^{→})₀), der aus der Summe (Σ(Iₙ^{→})ₒ) der gemessenen Stromvektoren gebildet wird, einen Korrekturvektor (εIₙ^{→}) zu bestimmen, der kollinear und entgegengesetzt zum falschen Differentiaistromvektor ist, und diesen Korrekturvektor auf jeden gemessenen Stromvektor ((Iₙ^{→})₀) anzuwenden, um einen korrigierten Stromvektor (Iₙ^{→}_{c}) zu erhalten, der im Wesentlichen dem realen Stromvektor (Iₙ^{→}) entspricht, um den falschen Differentialstromvektor((I_{d}^{→})₀) statistisch zu korrigieren.

2. Messkorrekturverfahren nach Anspruch 1, **dadurch gekennzeichnet, dass** der iterative Konvergenzalgorithmus bei jeder Iteration (k) und für jeden berechneten iterativen Stromvektor ((Iₙ^{→})ₖ), der von der Iteration null an durch die Messung der Stromvektoren ((Iₙ^{→})₀) zum realen Stromvektor (Iₙ^{→}) hin konvertiert, einen partiellen Korrekturvektor ((εIₙ^{→})ₖ) bestimmt, der zu diesem iterativen Stromvektor ((Iₙ^{→})ₖ) hinzuzufügen ist, um den Stromvektor ((Iₙ^{→})ₖ₊₁) der folgenden Iteration (k+1) zu ergeben, wobei dieser partielle Korrekturvektor ((εIₙ^{→})ₖ) kollinear und entgegengesetzt zum falschen Differentialstromvektor ((I_{d}^{→})₀) ist und von der gleichen Norm wie das normalisierte vektorielle Produkt jedes iterativen Stromvektors ((Iₙ^{→})ₖ) ist, und wobei der iterative falsche Differentialstromvektor ((I_{d}^{→})ₖ), der durch einen Koeffizienten λ gewichtet wird, die Konvergenzgeschwindigkeit des Algorithmus beeinflusst und zwischen null und eins liegt.

3. Messkorrekturverfahren nach einem der Anspräche 1 und 2, **dadurch gekennzeichnet, dass** ein neuer Test der Gesamtheit der Ströme der geschützten Zone während einer Serie von Tests gemessen wird, sobald zwei Korrekturvektoren (εIₙ^{→})t₁, (εIₙ^{→})t₂, die bei zwei aufeinanderfolgenden Tests des realen Vektorstroms (Iₙ^{→}) eines selben Stromwandler (CTₙ) berechnet wurden, zwei Verstärkungskorrekturen ((dgₙ)t₁,(dgₙ)t₂) entsprechen, die voneinander eine prozentuale Abweichung aufweisen, die größer ist als ein bestimmter Bezugswert (r), und **dadurch**, dass das statistische Ausgleichsverfahren für eine Zahl (N_{T}) von Tests durchgeführt wird, die statistisch um so größer ist, je größer die Zahl der Ströme (N_{C}) in der geschützten Zone ist.

4. Messkorrekturverfahren nach Anspruch 3, **dadurch gekennzeichnet, dass** der Bezugswert (r) auf kleiner als 20 % festgelegt ist.

5. Messkorrekturverfahren nach einem der Ansprüchen 1 bis 4, **dadurch gekennzeichnet, dass** ein partieller Korrekturvektor ((εIₙ^{→})ₖ), der bei einer Iteration erhalten wird, nicht berücksichtigt wird, wenn sein Modul größer als ein bestimmter festgelegter Prozentsatz des Moduls des falschen Differentialstromvektors ((I_{d}^{→})₀) ist, um einen Differentialstrom, der durch einen Fehler am Sammelschienensystem verursacht wird, vom falschen Differentialstrom ((I_{d}^{→})₀) unterscheiden zu können.

6. Messkorrekturverfahren nach einem der Anspruche 1 bis 5, **dadurch gekennzeichnet, dass** die Korrekturvektoren (εIₙ^{→}), die für die Gesamtheit der bei einem Test gemessenen Stromvektoren ((Iₙ^{→})₀) erhalten werden, ausgewertet werden, um für jeden Stromwandler (CTₙ) eine momentane Korrekturmatrix der Verstärkung und eine momentane Korrekturmatrix der Phasenverschiebung zu erhalten, die jeweils auf die vom Stromwandler erzeugte Verstärkung und Phasenverschiebung anzuwenden sind.

7. Messkorrekturverfahren nach Anspruch 6, **dadurch gekennzeichnet, dass** am Ende einer Testserie für jeden Stromwandler (CTₙ) eine stabilisierte Korrekturmatrix der Verstärkung oder der Phasenverschiebung erzeugt wird und der Konvergent der Korrekturmatrizen dieses Stromwandlers entspricht, die bei den Tests der Serie erhalten wurden, damit diese stabilisierten Korrekturmatrizen eine stabile Stromkonfiguration wiedergeben.

8. Messkorrekturverfahren nach einem der Anspruche 1 bis 7, **dadurch gekennzeichnet, dass** die tabellierten Daten und Funktionen der verschiedenen Konfigurationen der Zahl (N_{C}) der Ströme und der Zahl der (N_{T}) möglichen Tests es erlauben, eine Indikation (εIᵣ,εϕᵣ) der Qualität der Modul- und Phasenkonvergenz der statistischen Korrektur zu erhalten, die auf den gemessenen Differentialstromvektor anzuwenden ist, wobei diese statistische Korrektur auf eine bestimmte Zahl (N_{T}) von Tests hin berechnet wird und zur optimalen statistischen Korrektur hin konvertiert.
